**Europäisches Patentamt**

**European Patent Office**

**Office européen des brevets**

(19)

(11) Veröffentlichungsnummer: **0 203 306**
A2

# (12) EUROPÄISCHE PATENTANMELDUNG

(21) Anmeldenummer: **86104132.5**

(22) Anmeldetag: **25.03.86**

(51) Int. Cl.⁴: **G 11 B 15/675**, G 11 B 15/665

(30) Priorität: **25.05.85 DE 3519020**

(43) Veröffentlichungstag der Anmeldung: **03.12.86**
**Patentblatt 86/49**

(84) Benannte Vertragsstaaten: **CH DE FR GB IT LI**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Gärtner, Friedrich, Zoppoter Strasse 6, D-8510 Fürth (DE)**
Erfinder: **Kleinlein, Herbert, Sudetenstrasse 8, D-8507 Oberasbach (DE)**

(54) **Vorrichtung zum Antrieb eines Kassetteneinzugsmechanismus und eines Bandfädelmechanismus in einem Videorecorder mit Magnetbandkassette.**

(57) Es wird eine Vorrichtung zum Antrieb eines Kassetteneinzugsmechanismus und eines Bandfädelmechanismus in einem Videorecorder beschrieben, bei der beide Mechanismen von nur einem Antriebsmotor (8) gesteuert werden und getriebetechnisch so verbunden sind, daß die Getriebeteile ständig in Eingriff stehen. Dabei sind Kassetteneinzugsmechanismus und Fädelmechanismus über eine Triebwelle (11) verbunden, die auf der einen Seite über ein Schneckengetriebe (12, 13) mit dem Fädelring (6) des Fädelmechanismus und auf der anderen Seite über ein Differentialgetriebe (11, 17 bis 23, 25) mit dem Kassetteneinzugsmechanismus ständig in Eingriff steht. Ferner sind Sperreinrichtungen (14, 15, 16) vorgesehen, die entweder den Fädelmechanismus oder den Einzugsmechanismus in einer vorbestimmten Folge und Position sperren oder freigeben. Vorzugsweise ist das Differentialgetriebe ein Planetengetriebe.

EP 0 203 306 A2

# VORRICHTUNG ZUM ANTRIEB EINES KASSETTENEINZUGS-MECHANISMUS UND EINES BANDFÄDELMECHANISMUS IN EINEM VIDEORECORDER MIT MAGNETBANDKASSETTE

## BESCHREIBUNG

Die Erfindung bezieht sich auf eine Vorrichtung zum Antrieb eines Kassetteneinzugsmechanismus und eines Bandfädelmechanismus mit Fädelring und Bandführungselementen in einem Videorecorder mit Magnetbandkassette gemäß dem Oberbegriff des Patentanspruchs 1.

Bei modernen Videorecordern ist ein (meist frontseitiger) Gehäuseausschnitt vorgesehen, in den eine Magnetbandkassette eingelegt wird. Nach Einlegen der Bandkassette wird unmittelbar oder nach Betätigen einer Funktionstaste ein Kassetteneinzugsmechanismus aktiviert, der die Bandkassette meist in einer Hubbewegung in die Betriebsposition führt und darin hält.
Anschließend wird bei den wichtigsten Betriebsfunktionen, wie Aufnahme, Wiedergabe, Suchlauf, usw.,
das noch in der Bandkassette befindliche Magnetband
aus dieser mittels eines Fädelmechanismus mit Fädelring und Bandführungselementen ein Stück herausgezogen und um eine Kopftrommel mit Magnetköpfen teilweise herum- und an anderen Geräteteilen, wie Löschkopf, Andruckrolle, u. ä. vorbeigeführt. - Dabei ist
es bekannt, zwei verschiedene Motoren für Fädelmechanismus bzw. Kassetteneinzugsmechanismus vorzusehen.

Auch ist es bekannt, zur Reduzierung des mechanischen
Aufbaus des Videorecorders die beiden Mechanismen
über nur einen Antriebsmotor zu steuern bzw. anzutreiben (Funkschau, Heft 14/1984, Seiten 53 bis 56,
insbesondere Seite 54, mittlere Spalte, letzter Abs.).
Dabei ist jedoch nachteilig, daß das, beide Mechanismen über den Motor antreibende Steuergetriebe aufwendig gebaut ist und zur Erzielung zeitlich unterschiedlicher Abläufe die Getriebeteile in bestimmter
Weise aus- und eingerückt werden.

Der Erfindung liegt die Aufgabe zugrunde, eine Vorrichtung der eingangs genannten Art derart weiterzubilden, daß beide Mechanismen getriebetechnisch so verbunden sind, daß die Getriebeteile ständig in Eingriff stehen.

Dies wird erfindungsgemäß durch die im kennzeichnenden Teil des Patentanspruchs 1 angegebenen Merkmale gelöst.

Vorteilhafte Weiterbildungen der erfindungsgemäßen Vorrichtung ergeben sich aus den Unteransprüchen 2 bis 6.

Ein Ausführungsbeispiel der erfindungsgemäßen Vorrichtung ist in der Zeichnung näher erläutert. Es zeigen

Fig. 1    eine schematische Draufsicht auf eine Vorrichtung nach der Erfindung,

Fig. 2    eine vergrößerte Schnittdarstellung wesentlicher Teile der Vorrichtung nach Fig. 1 und

Fig. 3    eine Explosionsdarstellung einer verwendeten Getriebeanordnung.

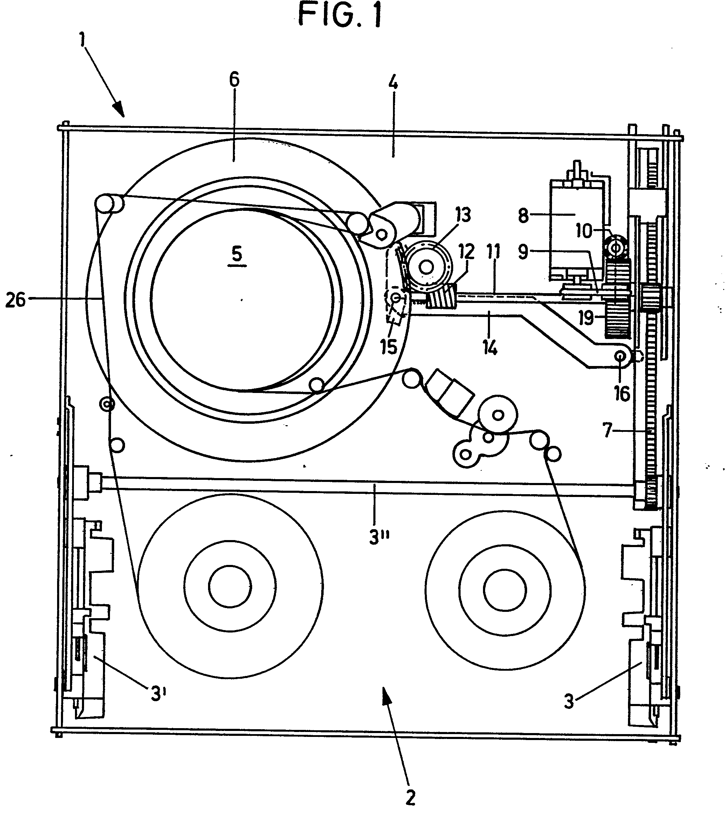

Figur 1 zeigt in schematischer Darstellung eine Draufsicht auf eine Vorrichtung nach der Erfindung in Verbindung mit dem sogenannten Laufwerk 1 eines Videorecorders. Dieses Laufwerk 1 besteht dabei im wesentlichen aus einer Wickeleinheit 2 mit Kassetteneinzugsmechanismus 3, 3', 3'' und einem Chassis 4 mit Kopftrommel 5, Fädelring 6, nicht näher bezeichneten Bandführungselementen und Funktionsteilen, wie Löschköpfe, Antriebsrolle, etc. Der Aufbau des im wesentlichen aus Kassettenhalterung, Schwenkhebeln mit Zahnsegment und sonstigen mechanischen Führungsteilen auf gegenüberliegenden Seiten der Wickeleinheit 2 sowie einer beide Seiten antriebsmäßig verbindenen Antriebsstange 3'' bestehenden Kassetteneinzugsmechanismus wird ansonsten nicht näher erläutert, da er beliebig gestaltet sein kann und für das Verständnis der Erfindung von untergeordneter Bedeutung ist. Wesentlich im Zusammenhang mit dem Kassetteneinzugsmechanismus ist allerdings noch eine Zahnstange 7, deren Funktion weiter unten noch erläutert werden wird.

Auch der Aufbau des Fädelmechanismus ist im wesentlichen bekannt. Wichtig für die Erfindung ist lediglich der Fädelring 6, der an seiner Unterseite einen Zahnkranz für seinen Antrieb sowie eine Ausnehmung aufweist, deren Funktion weiter unten näher erläutert werden wird.

Am Chassis 4 ist ferner ein Antriebsmotor 8 angeordnet, der über einen Riemen 9 eine Schnecke antreibt.

Die Schnecke treibt ihrerseits ein Differentialgetriebe
an, das für den Antrieb von Kassetteneinzugs- und Fädelmechanismus vorgesehen ist. Hierfür ist eine Triebwelle 11 vorgesehen, die auf der einen Seite über ein
Schneckengetriebe (Schnecke 12  und Zwischenzahnrad
13) mit dem Zahnkranz des Fädelrings 6 und auf der
anderen Seite über das Differentialgetriebe mit dem
Kassetteneinzugsmechanismus bzw. dessen Zahnstange 7
ständig in Eingriff steht.

Damit wegen des nur einen Antriebsmotors 8 und zur
gewünschten zeitlichen Steuerung (Kassetteneinzug,
dann Bandfädelvorgang bzw. Bandrückfädelvorgang, dann
Kassettenauswurf) der beiden Mechanismen diese entsprechend angetrieben werden, sind Sperreinrichtungen
vorgesehen, die entweder den Fädelmechanismus oder den
Einzugsmechanismus in vorbestimmter Folge und Position
sperren oder freigeben. Die Sperreinrichtung ist dabei
im wesentlichen als Sperrschieber 14 ausgebildet, der
an seinem einen Ende über eine Sperrklinke 15 in Eingriff mit der Ausnehmung im Fädelring 6 und an seinem
anderen Ende über einen Sperrzapfen 16 in Eingriff mit
einer Ausnehmung in der Zahnstange 7 kommt. Der Sperrschieber bzw. seine Sperrelemente (Sperrklinke 15/
Sperrzapfen 16) fällt mit Hilfe geeigneter Elemente,
wie Federn, wechselweise jeweils in die Ausnehmungen
von Fädelring 6 bzw. Zahnstange 7. Selbstverständlich
kann die im beschriebenen Ausführungsbeispiel verwendete Sperrklinke oder der Sperrzapfen durch Riegel oder ähnliche Gesperreteile ersetzt werden, die - statt der oben beschriebenen Federkräfte - über Keilflächen, o. ä. ebenfalls selbsttätig in die Ausnehmungen einschwenken und ein gekoppeltes Gesperreteil des zweiten oder nächsten Abtriebes betätigen und damit dessen Bewegung freigeben. Auch kann es sich bei den gesperrten Teilen abweichend vom Ausführungsbeispiel auch um Hebel, Ketten, Seile oder sonstige Bewegungselemente des jeweiligen Mechanismus handeln.

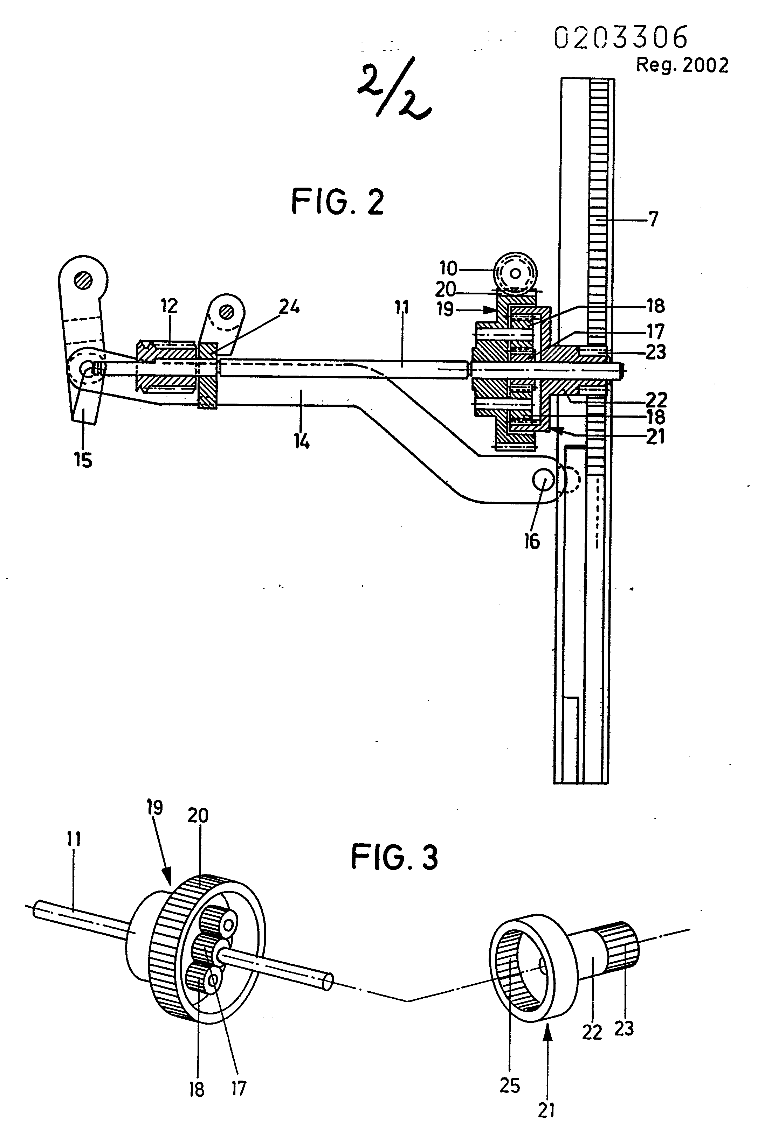

Figur 2 zeigt in vergrößerter und teilweise geschnittener Darstellung wesentliche Teile der Antriebsvorrichtung für den Kassetteneinzugs- bzw. Fädelmechanismus. So ist dort insbesondere näher das erfindungsgemäß vorgesehene Differentialgetriebe dargestellt. Dieses ist nach dem Ausführungsbeispiel von Fig. 2 ein Planetengetriebe, dessen zentrales Sonnenrad 17 auf der Triebwelle 11 sitzt. Das Sonnenrad 17 wird über Planetenräder 18 angetrieben, die in einem Planetenträger 19 mit äußerem Zahnkranz 20 angeordnet sind. Der Zahnkranz 20 wird von einer Schnecke 10 des Antriebsmotors 8 angetrieben. Die Planetenräder 18 treiben ein einstückiges Hohlrad 21 mit Innenverzahnung an, an dem ein Flansch 22 mit Verzahnung 23 angeordnet ist, die ihrerseits in die Zahnstange 7 des Einzugsmechanismus eingreift.

11

Die beiden, jeweils einstückigen Teile Hohlrad 21
und Planetenträger 19, der im übrigen auch die Achsen
für die Planetenräder 18 trägt, sind vorzugsweise
Kunststoffspritzteile, was eine einfache Herstellung,
einfachen Aufbau und Zusammenbau des Differentialgetriebes ermöglicht.

Neben den in Figur 2 noch dargestellten Vorrichtungsteilen, wie Schnecke 12 für den Antrieb des Fädelrings 6, Sperrschieber 14 mit Sperrklinke 15 und
Sperrzapfen 16, ist noch ein Lager 24 für die Triebwelle 11 eingezeichnet.

Figur 3 zeigt als Explosionsdarstellung den Aufbau des
erfindungsgemäßen Differentialgetriebes mit der Triebwelle 11, dem Planetenträger 19 mit Außenverzahnung
bzw. Zahnkranz 20, dem Sonnenrad 17 und zwei Planetenrädern 18, deren Anzahl auch größer gewählt werden
kann. Ferner ist das Hohlrad 21 mit Innenverzahnung 25
und dem Flansch 22 mit Verzahnung 23 gezeigt. Das
Hohlrad 21 ist zwecks deutlicherer Darstellung etwas
gedreht zur Richtung des vorgesehenen Zusammensteckens
mit dem Planetenträger 19 gezeichnet.

Im folgenden wird noch kurz die Funktionsweise der
erfindungsgemäßen Vorrichtung beschrieben:
Nach Einlegen der Kassette wird gleichzeitig oder nach
Betätigen einer Funktionstaste am Gerät der Kassetten-

12

einzugsmechanismus in Gang gesetzt, d. h. der Antriebsmotor 8 treibt den Zahnkranz 20 am Umfang des Planetenträgers 19 an, wodurch - bei gesperrtem Fädelring 6
und blockierter Triebwelle 11 - über die Planetenräder
18 und die Innenverzahnung 25 die Verzahnung 23 des
Hohlrades 21 die Zahnstange 7 für den Kasetteneinzug
antreibt. Nach Erreichen der Endstellung der Zahnstange
7 rastet der Sperrzapfen 16 in die entsprechende Ausnehmung ein, wodurch die Sperrklinke 15 ausrastet und
den Fädelring 6 freigibt. Dieser wird nun auf Grund des
gesperrten Hohlrades 21 über den weiter angetriebenen
Planetenträger 19, die Planetenräder 18, das Sonnenrad
17 und über die Triebwelle 11 sowie das Schneckengetriebe (Schnecke 12, Zwischenzahnrad 13) bis zu seiner Endstellung (Band 26 um die Kopftrommel 5, etc.
geführt) angetrieben.

Der umgekehrte Vorgang, beispielsweise nach Betätigen
der Funktionstaste "Kassettenauswurf", läuft analog
zur oben geschilderten Reihenfolge ab, d. h. zunächst
Rückfädeln des Bandes 26 mittels des Fädelrings 6 und
seiner Führungsteile in die Ausgangsstellungen bzw.
Nullstellungen von Band 26 und Fädelring 6, Blockieren
des Fädelrings 6 und zugleich Freigabe der Zahnstange 7,
Transport der Kassette im Kassettenschlitten in den
Gehäuseausschnitt - all dies bei umgekehrter Drehrichtung des Antriebsmotors 8.

Die vorstehend geschilderten Funktionsabläufe erfolgen über nur einen Antrieb(smotor) und stellen sicher, daß alle Getriebeteile ständig im Eingriff verbleiben und somit einen sicheren Funktionsablauf gewährleisten.

VORRICHTUNG ZUM ANTRIEB EINES KASSETTENEINZUGS-
MECHANISMUS UND EINES BANDFÄDELMECHANISMUS IN EINEM
VIDEORECORDER MIT MAGNETBANDKASSETTE

PATENTANSPRÜCHE

1. Vorrichtung zum Antrieb eines Kassetteneinzugsmechanismus und eines Bandfädelmechanismus mit
Fädelring und Bandführungselementen in einem Videorecorder mit Magnetbandkassette, wobei der Einzugsmechanismus nach Einlegen der Bandkassette diese in
die Betriebsposition führt und darin hält und anschließend das zunächst noch in der Bandkassette
befindliche Magnetband mittels des Fädelmechanismus
aus der Bandkassette herausgezogen und schräg teilweise um eine Kopftrommel mit Magnetköpfen geführt
wird, und wobei Kassetteneinzugsmechanismus und
Fädelmechanismus über nur einen Antriebsmotor steuerbar sind,  d a d u r c h   g e k e n n z e i c h -
n e t ,

2

- daß Kassetteneinzugsmechanismus und Fädelmechanismus über eine Treibwelle (11) verbunden sind,

- daß die Treibwelle (11) auf der einen Seite über
ein Schneckengetriebe (12, 13) mit dem Fädelring
(6) des Fädelmechanismus und auf der anderen Seite
über ein Differentialgetriebe (11, 17 bis 23, 25)
mit dem Kassetteneinzugsmechanismus ständig in
Eingriff steht und

- daß Sperreinrichtungen (14, 15, 16) vorgesehen sind,
die entweder den Fädelmechanismus oder den Einzugsmechanismus in einer vorbestimmten Folge und Position sperren oder freigeben.

2. Vorrichtung nach Anspruch 1, d a d u r c h
g e k e n n z e i c h n e t , daß das Differentialgetriebe (11, 17 bis 23, 25) ein Planetengetriebe
ist, wobei das zentrale Sonnenrad (17) auf der Triebwelle (11) sitzt, das über Planetenräder (18) und
den damit verbundenen und einen äußeren Zahnkranz
(20) für den Antrieb durch eine Schnecke (10) des
Antriebsmotors (8) aufweisenden Planetenträger (19)
angetrieben wird, während die Planetenräder (18) ein
einstückiges Hohlrad (21) mit Innenverzahnung (25)
antreiben, an dem ein Flansch (22) mit Verzahnung (23)
angeordnet ist, die eine Zahnstange (7) des Einzugsmechanismus antreibt, wobei der Planetenträger (19)
ebenfalls einstückig ausgebildet ist und die Achsen
für die Planetenräder (18) trägt.

3. Vorrichtung nach Anspruch 1 oder 2, d a -
d u r c h   g e k e n n z e i c h n e t , daß die
Sperreinrichtung (14, 15, 16) im wesentlichen als
Sperrschieber (14) ausgebildet ist, der auf der einen
Seite über eine Sperrklinke (15) in Eingriff mit dem
Fädelring (6) und auf der anderen Seite über einen
Sperrzapfen (16) in Eingriff mit der Zahnstange (7)
des Kassetteneinzugsmechanismus kommt.

4. Vorrichtung nach Anspruch 1, 2 oder 3,
d a d u r c h   g e k e n n z e i c h n e t ,   daß
die Sperreinrichtung (14, 15, 16) Hebel, Ketten,
Seile oder sonstige Bewegungselemente des jeweiligen
Mechanismus sperrt.

5. Vorrichtung nach Anspruch 3, g e k e n n -
z e i c h n e t   d u r c h   den wechselweisen
Einfall des Sperrschiebers (14) bzw. seiner Sperrelemente (Sperrklinke 15/Sperrzapfen 16) jeweils in
Ausnehmungen im Fädelring (6) bzw. der Zahnstange (7).

6. Vorrichtung nach einem der vorhergehenden
Ansprüche 1 bis 5, d a d u r c h   g e k e n n -

z e i c h n e t ,   daß Antriebsmotor (8) und Schnecke
(10) für den Antrieb des Planetenträgers (19) über
einen Riemen (9) verbunden sind.

# FIG. 1

0203306
Reg. 2002

# FIG. 2

# FIG. 3